# EUROPEAN PATENT SPECIFICATION

(11) **EP 1 585 084 B1**
(45) Date of publication and mention of the grant of the patent: **20.11.2013**
(21) Application number: 04105200.2
(22) Date of filing: 21.10.2004
(51) Int. Cl.: G08G 5/00, G01S 13/87, G01S 13/91, G01S 13/72

(54) **Data compression method, Distributed single integrated picture platform and network using it**
Datenkompressiosverfahren, Einzige integrierten Bildverteilungsplattform und dieses verwendenden Netzwerk
Méthode de compression de données, plat-forme d'image intégrée unique répartie et réseau utilisant une telle plate-forme

(30) Priority: 14.11.2003 NL 1024780
(43) Date of publication of application: 12.10.2005
(73) Proprietor: THALES NEDERLAND B.V., 7550 GD Hengelo (NL)
(72) Inventor: De WaarD, Huub Thales Intellectual Property, 94117 ARCUEIL (FR)
(74) Representative: Lucas, Laurent Jacques

(56) References cited:
- US-A- 3 223 996
- US-A- 4 855 932
- US-A- 5 138 321
- US-A- 5 471 433
- US-A- 5 842 156
- US-B1- 6 445 344

## Description

This invention relates to distributed single integrated picture method, platform and network for tracking moving objects. More particularly, this invention is adapted to create and maintain a Single Integrated Air Picture (SIAP) by each platform in the distributed network.

A network of distributed platform is assumed to be available, each equipped with a processing node and a number of collocated or non collocated sensors. Each of the platforms can receive information from the different other platforms. The objective of each platform in the distributed system is to reconstruct an identical copy of the Single Integrated Air Picture (SIAP) containing estimated, uniquely labelled composite trajectories of the different aircraft and missiles which are flying in the airspace covered by the different sensors. A composite trajectory contains local measurement information and information received from other platforms.

Since the end of the Cold War, peace keeping operations have become normal international practice. Furthermore, an enormous proliferation of modern weapons technology has occurred at the same time. The consequence is that in actual and future naval operation areas a large number of stealth targets are expected to be deployed. The result is that the available reaction time for a single air defence platform against a threat has been reduced significantly, resulting in a limited battle space to engage those targets. US-A-4 855 932 discloses a stand-alone 3-D electro-optical tracker. For a task force the battle space can be effectively enlarged by distribution of all available sensor based information to each member. The result is a distributed platform data fusion system where each platform has a complete overview of the battle space covered by all available sensors.

One possible solution is an approach where the different platforms exchange all non filtered, with tracks associated measurements. Each participant creates the same picture of the hostile environment.

Following this principle, the Cooperative Engagement Capability has been developed for military purposes. The Cooperative Engagement Capability (CEC) system is described in 'The Cooperative Engagement Capability', John Hopkins APL Technical Digest, Volume 16, Number 4(1995).

The Cooperative Engagement Capability (CEC) system is a distributed naval air defence system in which every contributing platform distributes all raw sensor measurements from the onboard sensor systems to provide each platform with the possibility to generate an identical copy of the Single Integrated Air Picture (SIAP).

A major disadvantage of this solution is that each platform has to process all available data. In terms of CPU-time, the cost can be very high. Very large delays possibly occur with the result that the compiled picture is unacceptable delayed compared to hostile developments in the real world. Furthermore, there is also a risk that the bandwidth of the available communication channels is exceeded which means that the transmission of measurements can be significantly delayed. This could mean that not all platforms in the task force can retrieve the measurements collected at a certain time interval at the same time, resulting in different global compiled pictures produces by each platform which can show large variations in track accuracy, continuity and label consistency. Thereby, the timely availability of the Single Integrated Air Picture (SIAP) is influenced.

In the Cooperative Engagement Capability (CEC) system where all raw measurements are distributed and processed by each platform, the problems are the followings:
1. There is no guarantee that each platform produces and maintains the same copy of the Single Integrated Air Picture (SIAP);
2. In cases of loss of data in the network, it is not possible that the same unique trajectory labels are assigned to trajectories corresponding with the same aircraft or missile;
3. The system is only limited upwards scalable in the number of platforms/sensors.

This invention solves the above-mentioned drawbacks by firstly compressing the data in an artificial measurement, and eventually furthermore dynamical reduction.

An object of this invention is a data compression method adapted for tracking system comprising :
- the reception of locally acquired data,
- the prediction of trajectory from these locally acquired data,
- the calculation of short tracks from these locally predicted trajectories, said short track comprising a vector and a covariance matrix,
- an artificial measurement computation from each short track.

Another embodiment of this invention is the above data compression method comprising a dynamical reduction of the short track calculation and/or distribution.

The dynamical reduction could comprise an update of the short tracks only if predicted trajectory deviates from a predetermined value from an estimated local trajectory or if predicted trajectory accuracy becomes larger than a predetermined accuracy threshold.

A further object of this invention is a distributed single integrated picture platform comprising :
- at least a collocated sensor,
- a receiving unit for receiving short tracks from other platforms, and
- at least a processing node using the above data compression method and generating the single integrated picture from the received short tracks and sensor measurements.
   Moreover, another object of this invention is a distributed single integrated picture network comprising at least two of these distributed single integrated picture platforms.
   Further features and advantages of the invention will be apparent from the following description of examples of embodiments of the invention with reference to the drawing, which shows details essential to the invention, and from the claims. The individual details may be realised in an embodiment of the invention either severally or jointly in any combination.
- Figure 1, a schematic view of the artificial measurement of the data compression method according to the invention,
- Figure 2, a schematic view of the dynamical data compression method according to the invention.

In the proposed solution according to the invention, each platform has a processing node which can receive measurements or short tracks from other platforms. The short tracks is a track for an object based only on the most recent measurements. Thus, the short track concentrates several measurements.

A short track is computed in such way that its errors are not cross correlated with the errors of any other data in the system for the same target. Thus, each short track is independent of the other short tracks calculated solving the correlation problems.

Moreover, the short tracks can be calculated in order to be able to be processed as a real sensor measurement to produce a trajectory, so the received short tracks can be directly used to form the composite trajectory.

The short tracks ST can be calculated using extended Kalman filter technology. The processing is then based on Multiple Hypothesis Tracking as described in 'A new concept for Task Force Data Fusion' written by H.W. de Waard and W. Elgersma published in Signal and Data Processing of Small Targets 2001 proceedings.

Even, if by transmitting short tracks, the bandwidth occupation and/or the global distributed system computation is already reduced compared to full non collocated sensor measurements distribution, this reduction is not always sufficient.

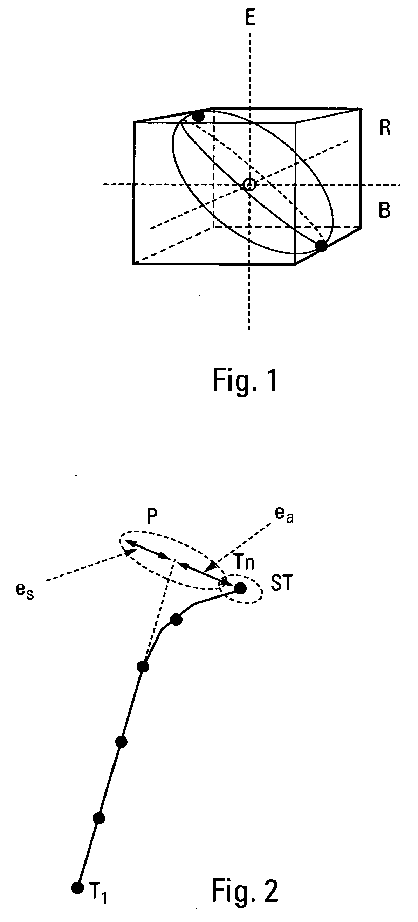

Figure 1 shows the transformation from a short track ST to an artificial measurement AM. In our example, the short track comprise a vector (position, velocity, acceleration) and a covariance matrix containing the accuracy information. This covariance matrix is used to determine a volume which contains the probable but unknown positions of the real target expressed in coordinates (Range R, Bearing B and Epsilon E in our example). The dimension of the covariance matrix is N, N is equal to 9 in this example.

In the figure, this volume is an ellipsoid. The volume is approximated by a simpler volume (i.e. defined by a matrix whose dimension K is less than N), a cube in this example.

The approximation volume may be defined as having a surface comprising the minimum and maximum points (black points of figure 1) of the volume to approximate. The KxK accuracy matrix could be defined as a matrix with only non zero elements on the diagonal (3 non zeros elements in the case of the cube).

Due to the fact that the artificial measurement AM is distributed instead of the m associated measurements used for calculating the short track, the amount of data is reduced by a factor m. With respect to the distribution of not correlated raw sensor measurements, even for lower m values a significant reduction is produced.

Figure 2 shows the basic idea behind dynamical reduction of the short track. In the figure 2 the estimated local trajectory ST based on the local platform sensor measurements S₁... Sₙ and the prediction of this trajectory P from the last time a short track ST has been calculated are shown.

If the statistical error eₛ or the systematical error eₐ becomes larger than a pre set threshold values a new short track ST is calculated and/or distributed. A measure for the involved statistical errors is determined by ratio of the volumes of the required predicted and estimated accuracy volume (ellipsoids in this example). A measure for the involved systematical errors is determined by the difference in position between the predicted and the estimated trajectory in state space.

The black point of Figure 2 show a local trajectory update at one platform. For each local trajectory a prediction P is calculated from the last time a short track ST has been calculated. A new short track is only calculated and/or distributed if the prediction P deviates too much from the estimated local trajectory or if it becomes too inaccurate compared with preset thresholds.

Due to the two steps compression data : artificial measurement and dynamical reduction (alone or in combination), the amount of information to be distributed is much smaller compared with the situation that not correlated raw sensor measurements are distributed.

Another application to the distributed single picture compilation method may be surveillance of any kind of space : not only air space but also over sea or under sea, or land space...

More generally, such distributed single picture compilation method may be used to monitor a space for military or civilian reasons: battle space management, airport space management, cost monitoring for rescue management, nature (e.g. seismic) monitoring for space clearing management...

## Claims

1. A data compression method adapted for distributing sensor measurement data through a network of platforms, each platform comprising a system for tracking targets from sensor measurement data, each tracking system,
predicting trajectories (P) of targets from measurement data acquired from at least one collocated sensor, each tracking system further calculating a short track (ST) from each predicted trajectory, the short track being only based on the most recent measurement data in the trajectory and,
distributing short tracks (ST) to other platforms through the network;
said short track comprising a vector and a covariance matrix, **characterised in that** it comprises an artificial measurement computation from each short track, said artificial measurement comprising Range, Bearing, Epsilon information.

2. Data compression method according to Claim 1 **characterised in that** the artificial measurement computation comprises a computation of a probable object 3D position and an approximation of the volume defined by the covariance matrix by an 3x3 accuracy matrix corresponding to a cube approximation.

3. Data compression method according to any of the preceding claims **characterised in that** the geometric representation of the covariance matrix is an ellipsoid whose minimum and maximum are points of the cube surface defined by the 3x3 accuracy matrix.

4. Data compression method according to any of the preceding claims **characterised in that** it comprises a dynamical reduction of the short track calculation and/or distribution.

5. Data compression method according to any of the preceding claims **characterised in that** the dynamical reduction comprises an update of the short tracks only if predicted trajectory deviates more than a predetermined value from an estimated local trajectory.

6. Data compression method according to any of the preceding claims **characterised in that** the dynamical reduction comprises an update of the short tracks only if predicted trajectory accuracy becomes larger than a predetermined accuracy threshold.

7. Data compression method according to any of the preceding claims **characterised in that** the update comprises the calculation of a short track from the locally predicted trajectory.

8. Data compression method according to preceding claim **characterised in that** the update comprises the calculation of articial measurement.

9. Data compression method according to any of the preceding claims **characterised in that** the update comprises the distribution of the short track or artificial measurement.

10. Distributed single integrated picture platform comprising:
- at least a collocated sensor,
- a receiving unit for receiving short tracks from other platforms, and
- at least a processing node using data compression method according to any of the preceding claim, and generating the single integrated picture from the received short tracks and sensor measurements.

11. Distributed single integrated picture network comprising at least two of the distributed single integrated picture platforms according to the preceding claim.

## Patentansprüche

1. Datenkomprimierungsverfahren, angepasst zum Verteilen von Sensormessungsdaten über ein Netzwerk von Plattformen, wobei jede Plattform ein System zum Verfolgen von Zielen anhand von Sensormessungsdaten umfasst, wobei jedes Verfolgungssystem Trajektorien (P) von Zielen anhand von Messungsdaten vorhersagt, die von mindestens einem am gleichen Ort befindlichen Sensor erfasst werden, wobei jedes Verfolgungssystem ferner eine Kurzbahn (ST) aus jeder vorhergesagten Trajektorie berechnet, wobei die Kurzbahn nur auf den jüngsten Messungsdaten in der Trajektorie beruht, und Kurzbahnen (ST) über das Netzwerk auf andere Plattformen verteilt,
wobei die Kurzbahn einen Vektor und eine Kovarianzmatrix umfasst; **dadurch gekennzeichnet, dass** es eine künstliche Messungsberechnung aus jeder Kurzbahn umfasst, wobei die künstliche Messung Entfernungs-/Peilungs-/Epsilon-Information umfasst.

2. Datenkomprimierungsverfahren nach Anspruch 1, **dadurch gekennzeichnet, dass** die künstliche Messungsberechnung eine Berechnung einer wahrscheinlichen 3D-Objektposition und eine Näherung des durch die Kovarianzmatrix definierten Volumens durch eine einer Würfelnäherung entsprechende 3×3-Genauigkeitsmatrix umfasst.

3. Datenkomprimierungsverfahren nach einem der vorhergehenden Ansprüche, **dadurch gekennzeichnet, dass** die geometrische Darstellung der Kovarianzmatrix ein Ellipsoid ist, dessen Minimum und Maximum Punkte der durch die 3x3-Genauigkeitsmatrix definierten Würfeloberfläche sind.

4. Datenkomprimierungsverfahren nach dem vorhergehenden Anspruch, **dadurch gekennzeichnet, dass** es eine dynamische Verringerung der Kurzbahnberechnung und/oder -verteilung umfasst.

5. Datenkomprimierungsverfahren nach einem der vorhergehenden Ansprüche, **dadurch gekennzeichnet, dass** die dynamische Verringerung nur dann eine Aktualisierung der Kurzbahnen umfasst, wenn die vorhergesagte Trajektorie um mehr als einen vorbestimmten Wert von einer geschätzten lokalen Trajektorie abweicht.

6. Datenkomprimierungsverfahren nach einem der vorhergehenden Ansprüche, **dadurch gekennzeichnet, dass** die dynamische Verringerung nur dann eine Aktualisierung der Kurzbahnen umfasst, wenn die Genauigkeit der vorhergesagten Trajektorie größer als ein vorbestimmter Genauigkeitsschwellwert wird.

7. Datenkomprimierungsverfahren nach einem der vorhergehenden Ansprüche, **dadurch gekennzeichnet, dass** die Aktualisierung die Berechnung einer Kurzbahn aus der lokal vorhergesagten Trajektorie umfasst.

8. Datenkomprimierungsverfahren nach dem vorhergehenden Anspruch, **dadurch gekennzeichnet, dass** die Aktualisierung die Berechnung einer künstlichen Messung umfasst.

9. Datenkomprimierungsverfahren nach einem der vorhergehenden Ansprüche, **dadurch gekennzeichnet, dass** die Aktualisierung die Verteilung der Kurzbahn oder der künstlichen Messung umfasst.

10. Verteilte Plattform für einzige integrierte Bilder, umfassend:
- mindestens einen am gleichen Ort befindlichen Sensor,
- eine Empfangseinheit zum Empfangen von Kurzbahnen von anderen Plattformen, und
- mindestens einen Verarbeitungsknoten, der das Datenkomprimierungsverfahren nach einem der vorhergehenden Ansprüche verwendet und das einzige integrierte Bild aus den empfangenen Kurzbahnen und Sensormessungen erzeugt.

11. Verteiltes Netzwerk für einzige integrierte Bilder, das mindestens zwei der verteilten Plattformen für einzige integrierte Bilder nach dem vorhergehenden Anspruch umfasst.

## Revendications

1. Procédé de compression de données apte à répartir des données de mesure de capteur à travers un réseau de plateformes, chaque plateforme comportant un système de suivi de cibles à partir de données de mesure de capteur, chaque système de suivi prédisant des trajectoires (P) de cibles à partir des données de mesure acquises à partir d'au moins un capteur collocalisé, chaque système de suivi, en outre, calculant une piste courte (ST) à partir de chaque trajectoire prédite, la piste courte étant basée uniquement sur les données de mesure les plus récentes dans la trajectoire, et répartissant les pistes courtes (ST) vers d'autres plateformes à travers le réseau ;
ladite piste courte comprenant un vecteur et une matrice de covariance, **caractérisé en ce qu'**il comporte un calcul de mesure artificielle à partir de chaque piste courte, ladite mesure artificielle comprenant des informations Intervalle, Support, et Epsilon.

2. Procédé de compression de données selon la revendication 1, **caractérisé en ce que** le calcul de mesure artificielle comprend un calcul d'une position 3D d'objet probable et une approximation du volume défini par la matrice de covariance par une matrice de précision 3 x 3 correspondant à une approximation de cube.

3. Procédé de compression de données selon l'une quelconque des revendications précédentes, **caractérisé en ce que** la représentation géométrique de la matrice de covariance est un ellipsoïde dont le minimum et le maximum sont des points de la surface de cube définie par la matrice de précision 3 x 3.

4. Procédé de compression de données selon l'une quelconque des revendications précédentes, **caractérisé en ce qu'**il comprend une réduction dynamique du calcul et/ou de la distribution de pistes courtes.

5. Procédé de compression de données selon l'une quelconque des revendications précédentes, **caractérisé en ce que** la réduction dynamique comprend une mise à jour des pistes courtes uniquement si la trajectoire prédite s'écarte par plus d'une valeur prédéterminée d'une trajectoire locale estimée.

6. Procédé de compression de données selon l'une quelconque des revendications précédentes, **caractérisé en ce que** la réduction dynamique comprend une mise à jour des pistes courtes uniquement si la précision de trajectoire prédite devient supérieure à un seuil de précision prédéterminé.

7. Procédé de compression de données selon l'une quelconque des revendications précédentes, **caractérisé en ce que** la mise à jour comprend le calcul d'une piste courte à partir de la trajectoire prédite localement.

8. Procédé de compression de données selon la revendication précédente, **caractérisé en ce que** la mise à jour comprend le calcul de la mesure artificielle.

9. Procédé de compression de données selon l'une quelconque des revendications précédentes, **caractérisé en ce que** la mise à jour comprend la répartition de la piste courte ou de la mesure artificielle.

10. Plateforme d'image intégrée unique répartie, comprenant :
- au moins un capteur collocalisé ;
- une unité de réception destinée à recevoir des pistes courtes en provenance d'autres plateformes ; et
- au moins un noeud de traitement utilisant le procédé de compression de données selon l'une quelconque des revendications précédentes, et générant l'image intégrée unique à partir des pistes courtes reçues et des mesures de capteur reçues.

11. Réseau d'images intégrées uniques réparties, comprenant au moins deux des plateformes d'image intégrée unique réparties selon la revendication précédente.
